# EUROPEAN PATENT SPECIFICATION

(11) **EP 3 482 909 B1**
(45) Date of publication and mention of the grant of the patent: **01.09.2021**
(21) Application number: 18204791.0
(22) Date of filing: 07.11.2018
(51) Int. Cl.: B29C 64/393, B29C 64/135, B29C 64/153, B29C 64/268, B33Y 50/02, B22F 10/20, B22F 12/00

(54) **LASER SOLIDIFICATION APPARATUS FOR BUILDING OBJECTS BY LAYERWISE SOLIDIFICATION OF MATERIAL**
LASERVERFESTIGUNGSVORRICHTUNG ZUR HERSTELLUNG VON GEGENSTÄNDEN DURCH SCHICHTWEISES HÄRTEN VON MATERIAL
APPAREIL DE SOLIDIFICATION PAR LASER POUR LA FABRICATION D'OBJETS PAR DURCISSEMENT DE COUCHES

(30) Priority: 10.11.2017 GB 201718596
(43) Date of publication of application: 15.05.2019
(73) Proprietor: Renishaw plc, Gloucestershire GL12 8JR (GB)
(72) Inventor: DARDIS, John, Wotton-under-Edge, Gloucestershire GL12 8JR (GB); GARRARD, James, Stephen, Wotton-under-Edge, Gloucestershire GL12 8JR (GB); HEALEY, Callum, Wotton-under-Edge, Gloucestershire GL12 8JR (GB)
(74) Representative: Matthews, Paul

(56) References cited:
- WO-A1-2017/085468
- WO-A1-2017/187147

## Description

### Field of Invention

This invention concerns a laser solidification apparatus and, in particular, an apparatus for capturing sensor data collected through an optical train of an optical scanner of a laser solidification apparatus, such as a powder bed fusion apparatus.

### Background

Laser solidification apparatus produce parts through layer-by-layer solidification of a flowable material. There are various laser solidification methods, including material bed systems, such as selective laser melting (SLM), selective laser sintering (SLS) and stereolithography systems.

In selective laser melting, a powder layer is deposited on a powder bed in a build chamber and a laser beam is scanned across portions of the powder layer that correspond to a cross-section (slice) of the object being constructed. The laser beam melts or sinters the powder to form a solidified layer. After selective solidification of a layer, the powder bed is lowered by a thickness of the newly solidified layer and a further layer of powder is spread over the surface and solidified, as required. In a single build, more than one object can be built, the parts spaced apart in the powder bed.

The laser beam is typically scanned over the powder bed using an optical scanner comprising a pair of tilting mirrors, each rotated under the control of a galvanometer. Transducers are arranged to measure a position of the mirrors/galvanometers for control of the mirror positions. In this way, a demand position can be achieved.

WO 2007/147221 A1 discloses a selective laser melting apparatus comprising a scanner for scanning the laser beam across the powder surface and a spatially resolved detector (e.g. a CCD or CMOS camera) or an integrated detector (e.g. a photodiode with a large active area) for capturing radiation emitted by a melt zone and transmitted through an optical system of the scanner.

WO 2015/040433 discloses a laser solidification apparatus comprising a spectrometer for detecting characteristic radiation emitted by plasma formed during solidification of the powder by the laser beam.

A problem with such systems is that alignment of the measurement device to be coaxial with the laser beam is required at the site of use and it is difficult and highly complex to change the measurement device, typically requiring an operator to breach a laser safe housing of the optical module.

WO2017/085468 A1 discloses an optical module comprising a laser aperture for coupling to a laser module, a measurement aperture for coupling to measurement devices and an output aperture through which the laser beam is directed through the window onto the powder bed.

WO2017/187147 A1 discloses a plurality of laser modules that generate laser beams for melting the powder, the laser beams directed as required by a corresponding optical module. Each optical module comprises a beam splitter, which reflects the laser beam and transmits wavelengths of radiation coming from the working plane of the powder bed. The radiation that passes through the beam splitter is imaged by a detector in the form of a two-dimensional array of photodetector elements.

### Summary of Invention

According to a first aspect of the invention there is provided laser solidification apparatus for building objects by layerwise solidification of material according to claim 1.

In this way, the detector module may be removed from the laser solidification apparatus for cleaning, testing, maintenance or replacement without disassembling the optical module. In particular, the optical module may comprise an optical module housing containing the movable guiding element, the optical module housing having an outlet aperture therein though which the radiation emitted from the material bed is transmitted by the movable guiding element, and the detector module comprises a detector module housing containing the sensor, the detector module housing having a receiving aperture therein arranged for receiving radiation transmitted from the outlet aperture in the optical module housing when the detector module is mounted on the optical module.

One of the detector module and optical module may comprise a seal around the receiving aperture/outlet aperture for engaging with the other of the optical module and detector module so as to seal a transmission path for the radiation from the optical module to the detector module from dust and/or ambient light.

The optical module housing may comprise a filter for blocking light of a wavelength of the laser beam from passing out through the outlet aperture. This may allow the detector module to be removed safely without exposing an operator to potentially harmful laser light. The optical module housing and the detector module housing may be individually dust tight housings.

The control data may comprise demand positions sent to the controller for setting a position of the movable guiding element. The controller may be further arranged to receive control data from a master controller of the laser solidification apparatus. The measurement data may comprise a position of the guiding element measured by a transducer and/or a measured parameter of the laser beam, such as laser modulation and/or laser beam intensity. The data packet comprises control or measurement data sent to or generated by the optical module and sensor data based upon the sensor signals received from the detector module and optionally an identifier, such as a time stamp, that can be used to associate the sensor data with control data and/or measurement data. Data packets are described in WO2017/085469. In this way, in use, sensor signals for the removable detector module are integrated into the control and reporting processes of the optical module and married up with corresponding data close to its source to minimise errors that could occur due to latency in data communications in the laser solidification apparatus.

The detector module and the optical module may comprise complimentary mounting formations for removably mounting the detector module on the optical module in a mounting position.

The detector module may further comprise an adjustment mechanism, such as a flexure, for adjusting a relative position of an optical axis of the sensor to the mounting position. The adjustment mechanism may comprise a translation optical mount in which an optical element, such as an objective lens, is mounted. Adjustment of a position of the optical element may adjust a position of the optical element relative to a mounting position of the detector module and therefore, a focal position of the radiation on the sensor, in use.

The complimentary mounting formations may be arranged for removably mounting the detector module on the optical module in a repeatable mounting position. The position of the detector module on the optical module may be sufficiently repeatable in successive mountings such that, once the sensor has been aligned with the optical axis of the laser beam, for example using the adjustment mechanism, the detector module can be removed and remounted on the optical module without requiring realignment of an optical axis of the sensor. The position may be repeatable within 100 micrometres or less, preferably 50 micrometres or less and most preferably within 10 micrometres or less. The complimentary mounting formations may form a kinematic or pseudo-kinematic mount.

The detector module may further comprise a removable cover attachable to the detector module to cover the receiving aperture. The cover may comprise mounting formations that cooperate with the same mounting formations used to attach the detector module to the optical module to attach the cover to the detector module.

A detector module kit for a laser solidification apparatus may comprise a plurality of detector modules removably mountable to the laser solidification apparatus, each detector module of the plurality of detector modules comprising a sensor arranged for measuring a different property of the radiation emitted from the material bed and transmitted to the sensor by the movable guiding element of the optical module. For example, the different property may be different wavelength bands of the radiation, spatial or spectral dispersion of the radiation or an integrated intensity over a field of view.

The kit may allow an operator to select and mount a detector that is most appropriate for the selective laser solidification process that is to take place. For example, for the processing of different materials, different sensor setups may be required, such as setups arranged to detect light confined to wavelength bands characteristic for a particular material. Different ones of the detector modules may comprise different filters for filtering out different wavelengths of light. Furthermore, a detector module comprising a sensor for measuring spectral and/or spatial dispersion, such as a CCD or CMOS camera, may be used for the initial setup and/or maintenance of a laser solidification apparatus, such as an alignment of a plurality of lasers using the method as described in WO2017/187147, whereas an integrating sensor, such as a photodiode, may be used for in-process monitoring once the initial setup has been completed. A sensor for measuring spectral and/or spatial dispersion may be used for material development and/or development of a build of a part, whereas an integrating sensor may be used to monitor established builds after the development phase. In laser solidification processes, it is rare for a build to be successful on the first attempt and usually a plurality of development builds must be carried out to refine the process. During this development phase, additional information on the radiation may be beneficial. However, once a settled build process has been established, a detector module may be used for a different purpose, for example to check that the build stays within an acceptable process variation and for such purposes, an integrating detector may be sufficient.

A method of assembling a laser solidification apparatus may comprise mounting the detector module to the optical module and/or a test rig, aligning an optical axis of the sensor to a set alignment position when mounted on the optical module and/or a test rig, removing the detector module from the optical module and/or test rig for maintenance and/or transport, and (re)mounting the detector module on the optical module with the sensor in the set alignment position such that the detector module is ready for recording sensor signals during a laser solidification process.

### Description of the Drawings

**Figure 1** is a schematic illustration of a powder bed fusion apparatus according to one embodiment of the invention;
**Figure 2** is a perspective view of a detector module;
**Figure 3** **is** a perspective view of an optical module wherein a hood has been removed;

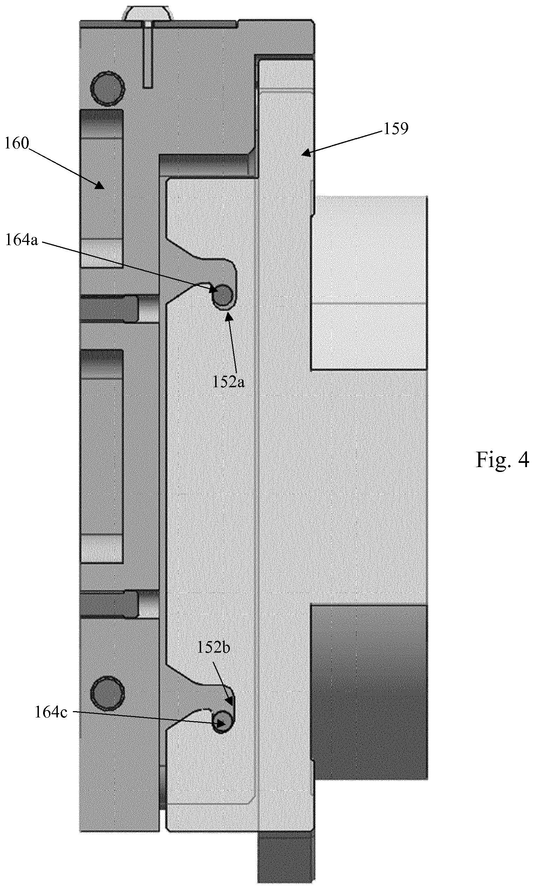

**Figure 4** is a side view of the mounting formations of the detector module and the optical module;
**Figures 5a and 5b** are close-ups of the mounting formations shown in Figure 4;
**Figure 6** is a perspective view of an adjustment mechanism for adjusting a position of an objective;
**Figure 7** is a perspective view of a detector module;
**Figure 8** is a side view of the detector module shown in in Figure 7 connected to an optical module;
**Figures 9a and 9b** are plan views of upper mounting formations of the detector module of Figure 8; and
**Figure 10** is a perspective view of lower mounting formation of the detector module.

### Description of Embodiments

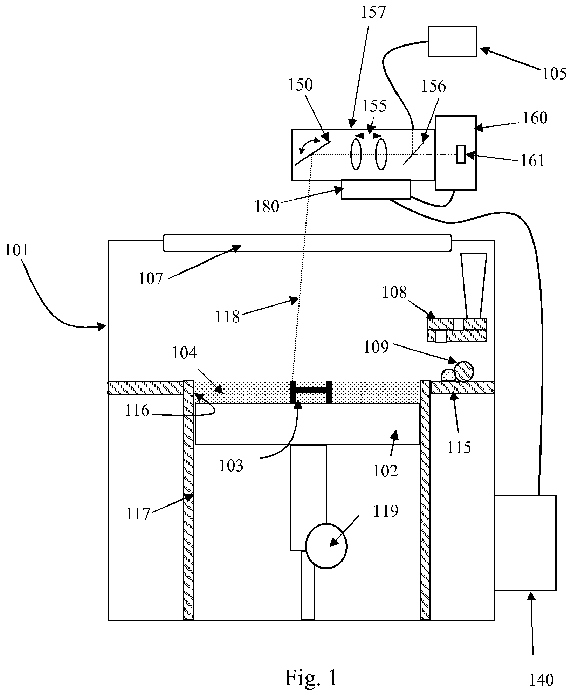

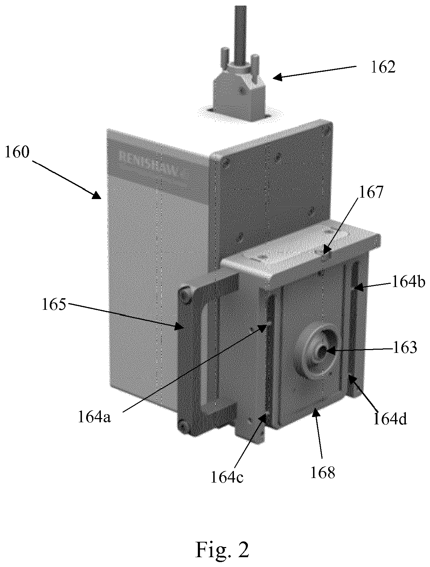

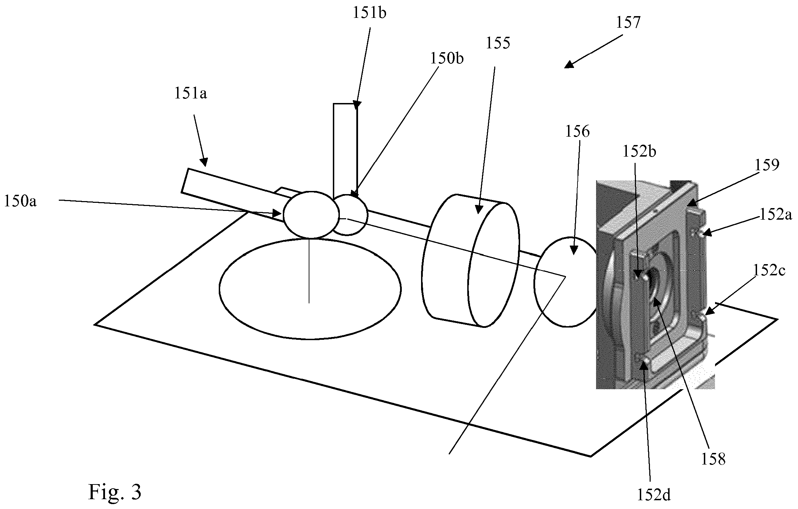

Referring to Figures 1 to 3, an additive manufacturing apparatus according to an embodiment of the invention comprises a build chamber 101 having therein a top plate 115 providing a surface onto which powder can be deposited and a build sleeve 117 in which a build platform 102 is movable. The build sleeve 117 and build platform 102 define a build volume 116 in which an object 103 is built by selective laser melting powder 104. The build platform 102 supports the object 103 and a powder bed 104 during the build. The platform 102 is lowered within the build sleeve 117 under the control of motor 119 as successive layers of the workpiece 103 are formed.

Layers of powder are formed as the workpiece 103 is built by lowering the platform 102 and spreading powder dispensed from dispensing apparatus 108 using wiper 109. For example, the dispensing apparatus 108 may be apparatus as described in WO2010/007396.

At least one laser module, in this embodiment laser module 105 generates a laser 118 for melting the powder 104. The laser 118 is directed as required by a corresponding optical module 157. The laser beam 118 enters the chamber 101 via a window 107. In this embodiment, the laser module 105 comprises a fibre laser, such as Nd YAG fibre laser. The laser beam enters the optical module 157 from above and is directed over the surface of the powder bed 104 by movable mirrors tiltable mirrors 150a, 150b (only one of which is shown in Figure 1). One of the mirrors 150 is tiltable to steer the laser beam in an X-direction and the other tiltable mirror 150 is tiltable to steer the laser beam in a Y-direction perpendicular to the X-direction. Movement of each tiltable mirror 150a, 150b is driven by a galvanometer 151a, 151b. A position of each galvanometer is measured by a transducer. In this embodiment, the transducer is in accordance with the transducer described in US5844673. The optical module 157 further comprises movable focussing optics 155 for adjusting the focal length of the corresponding laser beam. A beam splitter 156 directs light of the laser wavelength from an input to the tiltable mirrors 150 and transmits light of other wavelengths that is emitted from the powder bed 104 to a detector module 160 via an outlet aperture 158. A filter (not shown) is provided just in-front of aperture 158 to filter out light of the laser wavelength such that light of the laser wavelength cannot pass out from outlet aperture 158.

Mounted around aperture 158 is a detector module connecting plate 159. The connecting plate 159 comprises four mounting formations in the form of slots 152a, 152b, 152c and 152d for receiving mounting formations in the form of pins 164a, 164b, 164c and 164d of the detector module 160, as described in more detail below.

A hood (not shown) fits over the optical components 150a, 150b, 155, 156 to provide a light tight and dust tight housing,
The optical module further comprises an integrated optical module control unit 180 having communication interfaces for communicating with master controller 140 and the detector module 160. In this embodiment, the interface is connected to an interface of the detector module 160 via a releasable cable 162.

The detector module 160 comprises at least one detector for detecting radiation transmitted to the detector module 160 from the optical module 157. In this embodiment, the detector is a photodetector 161 for detecting an integrated intensity of the transmitted light. However, in other embodiments the detector may alternatively or additionally comprise a further photodetector, a PSD, a CCD or CMOS camera and/or spectrometer.

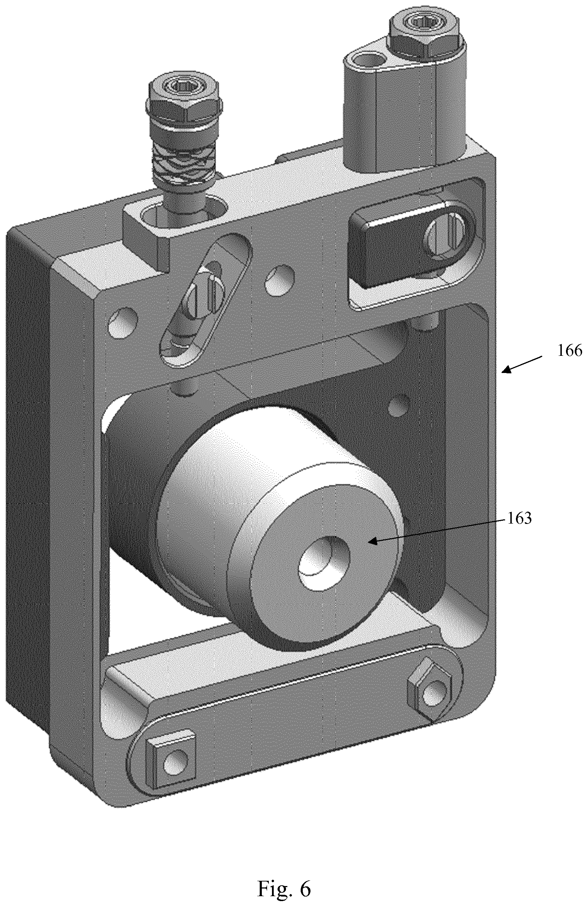

The radiation enters the detector module via a receiving inlet of the detector module 160, in this embodiment in the form of an objective lens 163. As shown in Figure 6, the objective lens 163 is mounted in an adjustment mechanism 166 in the form of a flexure for adjusting a position of the objective lens relative to a mounting position of the detector module 160 on the optical module 157.

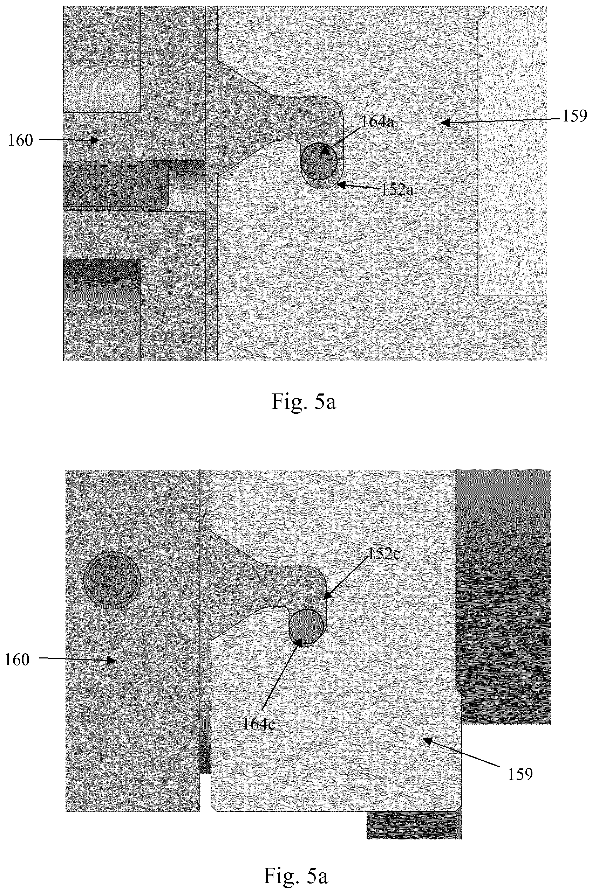

The detector module 160 is mounted onto the optical module 157 via four mounting pins 164a, 164b, 164c, 164d that fit into slots 152a, 152b, 152c, 152d on the optical module 157. Slots 152a and 152b have a first cross-sectional shape (as shown in Figure 5a) and slots 152c and 152d have a second cross-sectional shape (as shown in Figure 5b). The second cross-sectional shape is a slightly V-shaped cross-section having a radius of curvature smaller than the radius of curvature of the corresponding pin 164c, 164d. In this way, each pin 164c, 164d when pushed in to the corresponding slot 152c, 152d engages with two contact points on either side of the slot 152c, 152d defining a position in five degrees of freedom (but not defining a position of rotation about the pins 164c, 164d). The first cross-sectional shape has a U-shape having a depth and width such the pin 164a, 164b received therein will not engage with a valley of the U-shaped cross-section before the pins 164c, a64d engages with the side walls of their corresponding slots 152c, 152d such that mounting of the detector module is not over-constrained. However, when mounted on the optical module 157, the pins 164a, 164b engage with a rear-surface of the U-shaped cross-section to define a position relative to a rotational axis of the pins 164c, 164d. In this way, the pins 164a, 164b, 164c, 164d and slots 152a, 152b, 152c, 152d define a mounting position of the detector module 160 relative to a position of the optical module 157 in six degrees of freedom when the detector module 160 is mounted thereon. This position is repeatable on removable and remounting of the detector module 160 on the optical module 157.

The detector module 160 is urged into this defined mounting position by a bolt 167 which engages with a surface of the connecting plate 159 to push the pins 164a, 164b, 164c, 164d into slots 152a, 152b, 152c, 152d.

A seal 168 is provided around the receiving aperture 163 and is arranged to engage with the connecting plate 159 to provide a dust tight and ambient light tight seal between the outlet aperture 158 of the optical module 157 and the receiving aperture 163 of the detector module 160.

A handle 165 is provided for an operator to grip when mounting and/or removing the detector module 160 from the optical module 157.

A master controller 140 is in communication with modules of the additive manufacturing apparatus, namely the laser module 105, optical module 157, build platform 102, dispensing apparatus 108, wiper 109 and controller 180. The controller 140 controls the modules based upon commands in a build file.

As described in WO2017/085469, sensor values generated by sensors in the optical module 157 and the detector module 160 are sent to controller 180 and each sensor value associated with a time stamp corresponding to a time at which the sensor value was generated. The optical module may comprise transducers for measuring a position of the tiltable mirrors 150a, 150b and these measured positions may be packaged together with the sensor values from the detector module 160 and a time stamp and delivered as a packet to the master controller 140, as described in pending UK patent application 1707807.2.

During an initial setup of the selective laser melting apparatus, the detector module 160 is aligned with the optical axis of the optical module 157 by mounting the detector module 160 on the optical module 160 or a test rig comprising corresponding mounting features and a position of the objective lens adjusted to centre collected radiation on the sensor in the detector module 160. If this is a first alignment after manufacture, the detector module 160 may be aligned at a manufacturing site and then removed for transport to a site at which the powder bed fusion apparatus will be used where it is then mounted onto/back onto the optical module 157 and realignment of the optics may not be required. In this way, a person skilled in the alignment of optics may not be required at the site of use. During use, it may become necessary to carry out maintenance of the detector module 160, for example cleaning dust and other dirt from surfaces of the detector module 160. To do this, the detector module 160 may be removed from the optical module 157 for cleaning and then remounted. Realignment of the optics upon remounting of the detector module 160 may not be required as the cooperating mounting formations 164a, 164b, 164c, 164d, 152a, 152b, 152c, 152d ensure that the detector module 160 is remounted in a mounting position which is sufficiently close to the mounting position in which the optics were aligned.

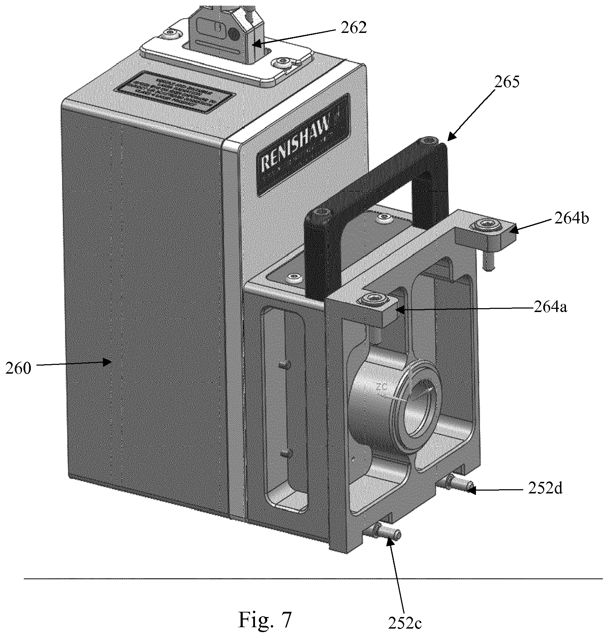

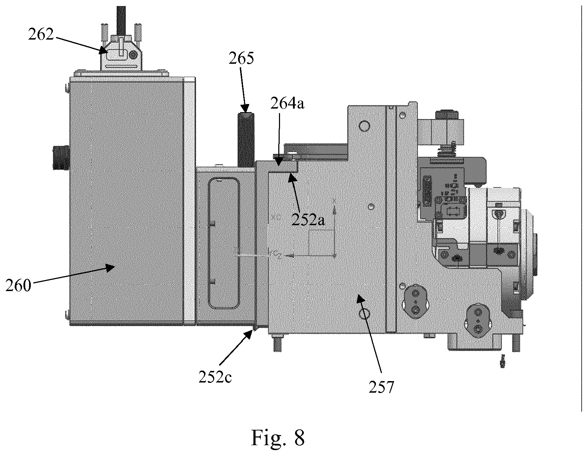

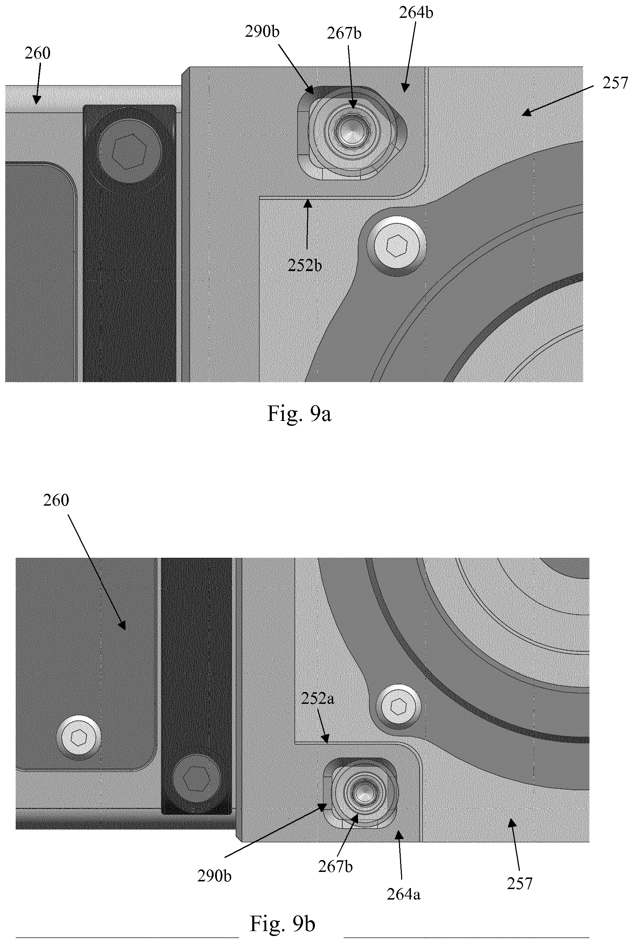

Figures 7 to 10 show a detector module 260.

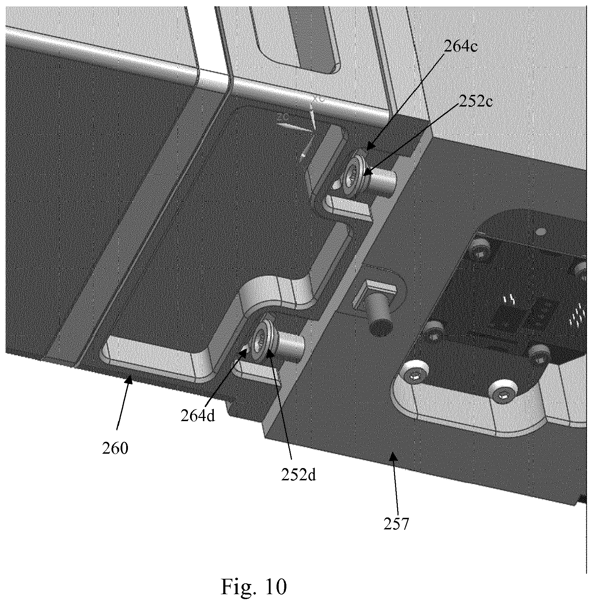

Features of the second embodiment that are the same or similar to, or perform a similar function to features of the first embodiment have been given the same reference numerals but in the series 200. This embodiment differs from the first embodiment in that mounting formations of a different form are used to provide a repeatable mounting position for the detector module 260 on the optical module 257. In this embodiment, the mounting formations on the detector module 260 comprise two L-shaped projections 264a and 264b at the top of the detector module 260 and two angled surfaces 264c, 264d at the bottom of the detector module 260. The optical module 257 comprises correspondingly shaped recesses 252a, 252b for receiving L-shaped mounting formations 264a and 264b. The L-shaped projections 246a and 264b comprise holes 290a, 290b therethrough for receiving bolts 267a, 267b, which engage with a threaded hole in the recess 252a, 252b. In this embodiment, hole 290a has approximately a square-shaped cross-section and the hole 290b has a pentagonal-shaped cross-section. An angled surface, in this embodiment at 45 degrees to the plane shown in Figure 10a and 10b, of the circular head of the bolt 290a, 290b engages with a correspondingly angled surface of the hole 290a, 290b.

At a bottom of the optical module 257 are provided wedge-shaped projections 252c, 252d for engaging with angled surfaces 264c, 264d, the contact surfaces being perpendicular to the contact surfaces of the bolts 267a, 267b and holes 290a, 290b. Accordingly, the mounting formations 264a, 264b, 264c, 264d, 252a, 252b, 252c, 252d define a mounting position of the detector module 260 such that the detector module 260 is returned to this mounting position on being removed from the optical module 257 and then remounted.

A kit may be provided comprising a plurality of the detector modules 160, 260, each detector module 160, 260 of the plurality comprising a different arrangement of sensors for detecting different properties of the radiation transmitted to the detector module 160, 260. In one embodiment, the plurality of detector modules comprises at least one first detector module 160, 260 comprising two photodetectors, one for detecting visible light and the second for detecting light in the infra-red spectrum, at least one second detector module comprising a position sensitive device (PSD) for detecting a position of the radiation transmitted to the detector module 160, 260 and at least one third detector module 160, 260 comprising a spectrometer for measuring an intensity of the radiation at a plurality of different wavelengths.

## Claims

1. A laser solidification apparatus for building objects by layerwise solidification of material, the laser solidification apparatus comprising a build platform (102) for supporting the object (103) and a material bed (104), an optical module (157; 257) comprising a movable guiding element (150a, 150b) for directing a laser beam (118) to solidify material of the material bed (104), and a detector module (160, 260) comprising a sensor (161) for detecting radiation emitted from the material bed (104) and transmitted to the sensor (161) by the movable guiding element (150a, 150b) of the optical module (157; 257), wherein the detector module (160, 260) is removably mounted to the optical module (157; 257), **characterised in that** the optical module (157; 257) comprises a controller (180) comprising an interface arranged to be releasably coupled to an electronic output of the detector module (160; 260) such that the controller (180) can receive sensor signals from the sensor (161) of the detector module (160; 260) and the controller (180) is arranged to form data packets comprising control or measurement data sent to or generated by the optical module (157; 257) and sensor data based upon the sensor signals received from the detector module (160; 260).

2. A laser solidification apparatus according to claim 1, wherein the optical module (157; 257) comprises a transducer for measuring a position of the guiding element (150a, 150b) and the controller (180) is arranged to form data packets comprising a position of the guiding element (150a, 150b) measured by the transducer and the sensor data based upon the sensor signals received from the detector module (160; 260).

3. A laser solidification apparatus according to claim 1 or claim 2, wherein the controller (180) is arranged to form data packets comprising a measured parameter of the laser beam (118) and the sensor data based upon the sensor signals received from the detector module (160; 260).

4. A laser solidification apparatus according to any one of the preceding claims, wherein the controller (180) is arranged to form data packets and an identifier that can be used to associate the sensor data with control data and/or measurement data.

5. A laser solidification apparatus according to claim 4, wherein the identifier comprises a time stamp.

6. A laser solidification apparatus according to any one of the preceding claims, wherein the detector module (160; 260) and the optical module (157; 257) comprise complimentary mounting formations (152a, 152b, 152c, 152d, 164a, 164b, 164c, 164d; 252a, 252b, 252c, 252d, 264a, 264b, 264c, 264d) for removably mounting the detector module (160; 260) on the optical module (157; 257) in a mounting position.

7. A laser solidification apparatus according to claim 6, wherein the detector module (160) further comprises an adjustment mechanism (166,) for adjusting a relative position of an optical axis of the sensor (161) to the mounting position.

8. A laser solidification apparatus according to claim 6 or claim 7, wherein the complimentary mounting formations (152a, 152b, 152c, 152d, 164a, 164b, 164c, 164d; 252a, 252b, 252c, 252d, 264a, 264b, 264c, 264d) are arranged for removably mounting the detector module (160; 260) on the optical module (157; 257) in a repeatable mounting position.

9. A laser solidification apparatus according to claim 8, wherein the complimentary mounting formations (152a, 152b, 152c, 152d, 164a, 164b, 164c, 164d; 252a, 252b, 252c, 252d, 264a, 264b, 264c, 264d) form a kinematic or pseudo-kinematic mount.

10. A laser solidification apparatus according to any one of the preceding claims, wherein the optical module (157; 257) comprises an optical module housing containing the movable guiding element (150a, 150b), the optical module housing having an outlet aperture (158) therein though which the radiation emitted from the material bed (104) is transmitted by the movable guiding element (150a, 150b) and the detector module (160; 280) comprises a detector module housing containing the sensor (161), the detector module housing having a receiving aperture (163) therein arranged to receive radiation transmitted from the outlet aperture (158) in the optical module housing when the detector module (160; 260) is mounted on the optical module (157; 257).

11. A laser solidification apparatus according to claim 10, wherein one of the detector module (160; 260) and optical module (157; 257) comprise a seal (168) around the receiving aperture (163)/outlet aperture (158) for engaging with the other of the optical module (157; 257) and detector module (160; 260) so as to seal a transmission path for the radiation from the optical module (157; 257) to the detector module (160; 260) from dust and/or ambient light.

12. A laser solidification apparatus according to claim 10 or claim 11, wherein the optical module housing comprises a filter for blocking light of a wavelength of the laser beam (118) from passing out through the outlet aperture (158).

## Patentansprüche

1. Laserverfestigungsvorrichtung zum Bauen von Objekten durch schichtweise Verfestigung von Material, wobei die Laserverfestigungsvorrichtung eine Bauplattform (102) zum Tragen des Objekts (103) und eines Materialbetts (104), ein optisches Modul (157; 257), das ein bewegliches Führungselement (150a, 150b) zum Richten eines Laserstrahls (118) umfasst, um Material des Materialbetts (104) zu verfestigen, und ein Detektormodul (160, 260) umfasst, das einen Sensor (161) zum Erfassen von Strahlung, die von dem Materialbett (104) emittiert und durch das bewegliche Führungselement (150a, 150b) des optischen Moduls (157; 257) an den Sensor (161) übertragen wird, wobei das Detektormodul (160, 260) abnehmbar an dem optischen Modul (157; 257) montiert ist, **dadurch gekennzeichnet, dass** das optische Modul (157; 257) einen Controller (180) umfasst, der eine Schnittstelle umfasst, die so angeordnet ist, dass sie lösbar mit einem elektronischen Ausgang des Detektormoduls (160; 260) gekoppelt ist, so dass der Controller (180) Sensorsignale von dem Sensor (161) des Detektormoduls (160; 260) empfangen kann, und der Controller (180) angeordnet ist, um Datenpakete zu bilden, die Steuer- oder Messdaten, die an das optische Modul (157; 257) gesendet oder von diesem erzeugt werden, und Sensordaten basierend auf den vom Detektormodul (160; 260) empfangenen Sensorsignalen umfassen.

2. Laserverfestigungsvorrichtung nach Anspruch 1, wobei das optische Modul (157; 257) einen Wandler zum Messen einer Position des Führungselements (150a, 150b) umfasst und der Controller (180) angeordnet ist, um Datenpakete zu bilden, die eine durch den Wandler gemessene Position des Führungselements (150a, 150b) und die Sensordaten basierend auf den Sensorsignalen, die von dem Detektormodul (160, 260) empfangen sind, umfassen.

3. Laserverfestigungsvorrichtung nach einem der Ansprüche 1 oder 2, wobei der Controller (180) angeordnet ist, um Datenpakete zu bilden, die einen gemessenen Parameter des Laserstrahls (118) und die Sensordaten basierend auf den vom Detektormodul (160; 260) empfangenen Sensorsignalen umfassen.

4. Laserverfestigungsvorrichtung nach einem der vorhergehenden Ansprüche, wobei der Controller (180) angeordnet ist, um Datenpakete und eine Kennung zu bilden, die verwendet werden kann, um die Sensordaten mit Steuerdaten und/oder Messdaten in Verbindung zu setzen.

5. Laserverfestigungsvorrichtung nach Anspruch 4, wobei die Kennung einen Zeitstempel umfasst.

6. Laserverfestigungsvorrichtung nach einem der vorhergehenden Ansprüche, wobei das Detektormodul (160; 260) und das optische Modul (157; 257) komplementäre Montageausbildungen (152a, 152b, 152c, 152d, 164a, 164b, 164c, 164d; 252a, 252b, 252c, 252d, 264a, 264b, 264c, 264d) zum lösbaren Montieren des Detektormoduls (160; 260) an dem optischen Modul (157; 257) in einer Montageposition umfassen.

7. Laserverfestigungsvorrichtung nach Anspruch 6, wobei das Detektormodul (160) ferner einen Einstellmechanismus (166) zum Einstellen einer relativen Position einer optischen Achse des Sensors (161) an die Montageposition umfasst.

8. Laserverfestigungsvorrichtung nach einem der Ansprüche 6 oder 7, wobei die komplementären Montageausbildungen (152a, 152b, 152c, 152d, 164a, 164b, 164c, 164d; 252a, 252b, 252c, 252d, 264a, 264b, 264c, 264d) zum lösbaren Montieren des Detektormoduls (160; 260) an dem optischen Modul (157; 257) in einer wiederholbaren Montageposition angeordnet sind.

9. Laserverfestigungsvorrichtung nach Anspruch 8, wobei die komplementären Montageausbildungen (152a, 152b, 152c, 152d, 164a, 164b, 164c, 164d; 252a, 252b, 252c, 252d, 264a, 264b, 264c, 264d) eine kinematische oder pseudokinematische Halterung bilden.

10. Laserverfestigungsvorrichtung nach einem der vorhergehenden Ansprüche, wobei das optische Modul (157; 257) ein optisches Modulgehäuse umfasst, das das bewegliche Führungselement (150a, 150b) enthält, wobei das optische Modulgehäuse eine Auslassöffnung (158) darin aufweist, durch die die vom Materialbett (104) emittierte Strahlung von dem beweglichen Führungselement (150a, 150b) übertragen wird und das Detektormodul (160; 280) ein den Sensor (161) enthaltendes Detektormodulgehäuse umfasst, wobei das Detektormodulgehäuse eine darin angeordnete Empfangsöffnung (163) zum Empfangen von Strahlung aufweist, die von der Auslassöffnung (158) in dem optischen Modulgehäuse übertragen ist, wenn das Detektormodul (160; 260) an dem optischen Modul (157; 257) montiert ist.

11. Laserverfestigungsvorrichtung nach Anspruch 10, wobei eines von dem Detektormodul (160; 260) und dem optischen Modul (157; 257) eine Dichtung (168) um die Empfangsöffnung (163) / Auslassöffnung (158) herum zum Eingriff mit dem anderen von dem optischen Modul (157; 257) und dem Detektormodul (160; 260) umfasst, um einen Übertragungsweg für die Strahlung vom optischen Modul (157; 257) zum Detektormodul (160; 260) gegen Staub und /oder Umgebungslicht abzudichten.

12. Laserverfestigungsvorrichtung nach einem der Ansprüche 10 oder 11, wobei das optische Modulgehäuse einen Filter umfasst, um Licht einer Wellenlänge des Laserstrahls (118) daran zu hindern, durch die Auslassöffnung (158) herauszutreten.

## Revendications

1. Appareil de solidification au laser pour construire des objets par solidification en couches d'un matériau, l'appareil de solidification au laser comprenant une plate-forme de construction (102) pour supporter l'objet (103) et un lit de matériau (104), un module optique (157 ; 257) comprenant un élément de guidage mobile (150a, 150b) pour diriger un faisceau laser (118) pour solidifier le matériau du lit de matériau (104), et un module de détection (160, 260) comprenant un capteur (161) pour détecter un rayonnement émis par le lit de matériau (104) et transmis au capteur (161) par l'élément de guidage mobile (150a, 150b) du module optique (157 ; 257), dans lequel le module de détection (160, 260) est monté de manière amovible sur le module optique (157 ; 257), **caractérisé en ce que** le module optique (157 ; 257) comprend un dispositif de commande (180) comprenant une interface agencée pour être couplée de manière libérable à une sortie électronique du module de détection (160; 260) de sorte que le dispositif de commande (180) puisse recevoir des signaux de capteur à partir du capteur (161) du module de détection (160 ; 260) et le dispositif de commande (180) est agencé pour former des paquets de données comprenant des données de commande ou de mesure envoyées au module optique (157 ; 257) ou générées par celui-ci et des données de capteur sur la base des signaux de capteur reçus du module de détection (160 ; 260).

2. Appareil de solidification au laser selon la revendication 1, dans lequel le module optique (157 ; 257) comprend un transducteur pour mesurer une position de l'élément de guidage (150a, 150b) et le dispositif de commande (180) est agencé pour former des paquets de données comprenant une position de l'élément de guidage (150a, 150b) mesurée par le transducteur et les données de capteur sur la base des signaux de capteur reçus du module de détection (160 ; 260).

3. Appareil de solidification au laser selon la revendication 1 ou 2, dans lequel le dispositif de commande (180) est agencé pour former des paquets de données comprenant un paramètre mesuré du faisceau laser (118) et les données de capteur sur la base des signaux de capteur reçus du module de détection (160 ; 260).

4. Appareil de solidification au laser selon l'une quelconque des revendications précédentes, dans lequel le dispositif de commande (180) est agencé pour former des paquets de données et un identifiant qui peut être utilisé pour associer les données de capteur à des données de commande et/ou des données de mesure.

5. Appareil de solidification au laser selon la revendication 4, dans lequel l'identifiant comprend une estampille temporelle.

6. Appareil de solidification au laser selon l'une quelconque des revendications précédentes, dans lequel le module de détection (160 ; 260) et le module optique (157 ; 257) comprennent des formations de montage complémentaires (152a, 152b, 152c, 152d, 164a, 164b, 164c, 164d ; 252a, 252b, 252c, 252d, 264a, 264b, 264c, 264d) pour monter de manière amovible le module de détection (160 ; 260) sur le module optique (157 ; 257) dans une position de montage.

7. Appareil de solidification au laser selon la revendication 6, dans lequel le module de détection (160) comprend en outre un mécanisme de réglage (166) pour régler une position relative d'un axe optique du capteur (161) par rapport à la position de montage.

8. Appareil de solidification au laser selon la revendication 6 ou 7, dans lequel les formations de montage complémentaires (152a, 152b, 152c, 152d, 164a, 164b, 164c, 164d ; 252a, 252b, 252c, 252d, 264a, 264b, 264c, 264d) sont agencées pour monter de manière amovible le module de détection (160 ; 260) sur le module optique (157 ; 257) dans une position de montage répétable.

9. Appareil de solidification au laser selon la revendication 8, dans lequel les formations de montage complémentaires (152a, 152b, 152c, 152d, 164a, 164b, 164c, 164d ; 252a, 252b, 252c, 252d, 264a, 264b, 264c, 264d) forment une monture cinématique ou pseudo-cinématique.

10. Appareil de solidification au laser selon l'une quelconque des revendications précédentes, dans lequel le module optique (157 ; 257) comprend un boîtier de module optique contenant l'élément de guidage mobile (150a, 150b), le boîtier de module optique ayant une ouverture de sortie (158) dedans à travers laquelle le rayonnement émis par le lit de matériau (104) est transmis par l'élément de guidage mobile (150a, 150b) et le module de détection (160 ; 280) comprend un boîtier de module de détection contenant le capteur (161), le boîtier de module de détection ayant une ouverture de réception (163) dedans agencée pour recevoir un rayonnement transmis depuis l'ouverture de sortie (158) dans le boîtier de module optique lorsque le module de détection (160 ; 260) est monté sur le module optique (157 ; 257).

11. Appareil de solidification au laser selon la revendication 10, dans lequel l'un du module de détection (160 ; 260) et du module optique (157 ; 257) comprend un joint d'étanchéité (168) autour de l'ouverture de réception (163)/l'ouverture de sortie (158) pour s'engager avec l'autre du module optique (157 ; 257) et du module de détection (160 ; 260) de manière à assurer l'étanchéité d'un chemin de transmission pour le rayonnement depuis le module optique (157 ; 257) jusqu'au module de détection (160; 260) à la poussière et/ou à la lumière ambiante.

12. Appareil de solidification au laser selon la revendication 10 ou 11, dans lequel le boîtier de module optique comprend un filtre pour empêcher la lumière d'une longueur d'onde du faisceau laser (118) de sortir de l'ouverture de sortie (158).
